# FASCICULE DE BREVET EUROPEEN

(11) **EP 4 573 451 B1**
(45) Date de publication et mention de la délivrance du brevet: **31.12.2025**
(21) Numéro de dépôt: 24700320.5
(22) Date de dépôt: 16.01.2024
(51) Int. Cl.: G06F 9/50, B64G 1/00, H04B 7/185

(54) **SYSTÈME ET PROCÉDÉ DE GESTION DE FLUX OPÉRATIONNELS POUR CONFIGURER LA CHARGE UTILE D'UN SATELLITE DE TÉLÉCOMMUNICATIONS**
SYSTEM UND VERFAHREN ZUR VERWALTUNG VON BETRIEBSFLÜSSEN ZUR KONFIGURATION DER NUTZLAST EINES TELEKOMMUNIKATIONSSATELLITEN
SYSTEM AND METHOD FOR MANAGING OPERATIONAL FLOWS FOR CONFIGURING THE PAYLOAD OF A TELECOMMUNICATIONS SATELLITE

(30) Priorité: 23.01.2023 FR 2300538
(43) Date de publication de la demande: 25.06.2025
(73) Titulaire: Airbus Defence and Space SAS, 31402 Toulouse Cedex 4 (FR)
(72) Inventeur: GADAT, Cécile, 31402 Toulouse cedex 4 (FR); CAMINO, Jean-Thomas, 31402 Toulouse cedex 4 (FR); LACAZE, Charles, 31402 Toulouse cedex 4 (FR)
(74) Mandataire: Santarelli
(86) Numéro de dépôt international: PCT/EP2024/050879
(87) Numéro de publication internationale: WO 2024/156540

(56) Documents cités:
- EP-B1- 3 698 486
- US-B2- 11 127 102
- PHILIPPE NOEL: "Mission Control Centre role in Thales Satcom systems", SATELLITE TELECOMMUNICATIONS (ESTEL), 2012 IEEE FIRST AESS EUROPEAN CONFERENCE ON, IEEE, 2 October 2012 (2012-10-02), pages 1 - 8, XP032296730, ISBN: 978-1-4673-4687-0, DOI: 10.1109/ESTEL.2012.6400142

## Description

### Domaine de l'invention

La présente invention appartient au domaine de la configuration de la charge utile d'un satellite de télécommunications par un centre de contrôle de mission de satellites. Notamment, l'invention concerne un système et un procédé de gestion de flux opérationnels pour configurer une charge utile d'un satellite de télécommunications.

### Etat de la technique

Un satellite de télécommunications est un satellite artificiel placé en orbite autour de la Terre pour répondre à des besoins de télécommunications. Les satellites de télécommunications sont placés sur différents types d'orbites en fonction des services auxquels ils doivent répondre : orbite géostationnaire, orbite basse de type LEO (acronyme anglais pour « Low Earth Orbit »), orbite moyenne de type MEO (acronyme anglais pour « Medium Earth Orbit »), orbite de Molnia, etc.

Parmi les différents types de services (ou missions) qui peuvent être attribués à des satellites de télécommunications, on peut citer notamment :
- des services pour la transmission d'informations vers des points de réception fixes, on parle alors de « service fixe par satellite » (FSS pour « Fixed-Satellite Service » dans la littérature anglo-saxonne) ou de diffusion DTH (acronyme anglais pour "Direct-To-Home", c'est à dire « directement vers le particulier ») ; c'est le cas par exemple pour la diffusion de programmes de télévision ou pour la téléphonie internationale ;
- des services de connexion à Internet à haut débit, on parle alors de système HTS (acronyme anglais pour « High-Throughput Satellite », « satellite haut débit » en français ; ces services sont utilisés notamment pour servir des utilisateurs qui habitent dans des régions isolées et qui ne peuvent pas être connectés à Internet par l'ADSL (aconyme anglais de « Asymetric Digital Subscriber Line », en français « ligne d'abonné numérique asymétrique ») ou par la fibre optique.

Pour une même quantité de spectre radio alloué, un satellite répondant à un service de type HTS fournit nettement plus de débit qu'un satellite répondant à un service de type FSS. Cette augmentation significative du débit pour les services de type HTS est obtenue par une réutilisation de canaux fréquentiels dans des faisceaux radio étroitement focalisés et agencés pour couvrir une région géographique d'intérêt. Au contraire, pour les services de type FSS, un seul faisceau radio très large est utilisé pour couvrir la région géographique d'intérêt.

Certains satellites de communications sont conçus pour remplir plusieurs missions de télécommunications simultanément ou de façon séquentielle. Par exemple, certains satellites remplissent des missions « hybrides » répondant à la fois à des services de type DTH et à des services de type HTS.

D'autres types de services de télécommunications existent, par exemple pour relayer des communications de satellites d'observation en orbite basse ou de vols habités, sans dépendre des réseaux de stations au sol (on parle alors de communication inter-satellites).

Un système de télécommunications par satellite comprend généralement trois segments: un segment spatial, qui est composé d'un ou plusieurs satellites de télécommunications en orbite autour de la Terre ; un segment de contrôle, qui comprend des équipements au sol utilisés pour contrôler et surveiller les satellites et les équipements de télécommunications embarqués à bord des satellites ; et un segment terrestre, qui comprend des stations terrestres utilisant les services fournis par les satellites de télécommunications.

Le segment de contrôle est généralement mis en œuvre par un centre de contrôle de mission de satellites de télécommunications (MCC pour « mission control center » en anglais). Un centre de contrôle de mission a pour tâche de gérer le déroulement des missions des satellites dont il est responsable. Dans le cadre de télécommunications par satellite, le centre de contrôle de mission doit notamment permettre une mise à jour de la configuration de la charge utile des satellites de télécommunications dont il est responsable pour répondre à des changements dans une mission en cours, voire pour réponde à une nouvelle mission significativement différente de la mission en cours.

La charge utile d'un satellite correspond à la partie du satellite qui permet de remplir la mission pour laquelle le satellite est conçu. Dans le cas d'une mission de télécommunications, la charge utile comprend notamment les antennes, la chaine d'émission (codage de source, codage de canal, modulation de signal, filtrage, transposition de fréquence, conversion numérique /analogique, amplification, formation de faisceaux, etc.), la chaine de réception (réception radio, amplification, transposition de fréquence, filtrage, conversion analogique/numérique, échantillonnage, démodulation, détection, décodage de canal, décodage de source, etc.), la configuration des ressources radio (bandes de fréquences utilisées dans le spectre radio, slots temporels disponibles, etc.).

Certains de ces éléments de la charge utile d'un satellite de télécommunications peuvent être configurés à distance par l'envoi de commandes à travers des signaux radio émis sur un lien de contrôle établi entre le satellite et le centre de contrôle de mission.

Pour définir, simuler et valider la configuration d'une charge utile d'un satellite de télécommunications, un centre de contrôle de mission utilise généralement un système de gestion de flux opérationnels (WMS pour l'acronyme anglais « Workflow Management System »). Il s'agit d'un système informatique pour gérer un flux opérationnel, c'est-à-dire un ensemble de tâches à accomplir pour configurer la charge utile d'un satellite de telle sorte qu'elle réponde à des exigences d'une mission définie par un opérateur. Un flux opérationnel comporte une séquence de modules algorithmiques ordonnés et paramétrés spécifiquement pour répondre aux exigences d'une mission particulière.

L'ensemble des variables de configuration d'une charge utile d'un satellite de télécommunications est cependant très vaste, et il est soumis à de nombreuses contraintes qui peuvent être de différentes natures (contraintes en termes de type de qualité de service, de performances à atteindre ou de régions géographiques à couvrir, contraintes réglementaires en termes de ressources radio disponibles, contraintes relatives à la consommation énergétique, etc.). La complexité qui en résulte ne peut être abordée que par un ensemble de modules algorithmiques qui doivent être adaptés de manière pertinente à chaque contexte de mission considéré. L'opération visant à configurer la charge utile d'un satellite est une opération généralement longue et coûteuse. Aussi, la conformité de la configuration d'une charge utile à des exigences d'une mission de télécommunication est généralement difficile à garantir.

Le brevet US 11127102 divulgue un système pour définir, simuler et/ou optimiser une configuration de plate-forme d'un satellite destiné à embarquer plusieurs charges utiles associées respectivement à différentes missions. Le système permet de générer différentes configurations de plate-forme en sélectionnant, pour chaque configuration, une plate-forme de satellite dont la conception est figée ainsi que différentes charges utiles pouvant être couplées à ladite plate-forme et répondant chacune à des exigences d'une mission particulière. Le système permet ensuite de sélectionner une configuration de plate-forme qui satisfait certains critères d'optimisation, notamment en termes de masse, de volume, de consommation énergétique, ou de régulation thermique. Ce document ne donne toutefois pas de solution pour optimiser spécifiquement la configuration d'une charge utile de satellite, notamment pour une mission de télécommunications.

### Exposé de l'invention

La présente invention a pour objectif de remédier à tout ou partie des inconvénients de l'art antérieur, notamment ceux exposés ci-avant.

À cet effet, l'invention est définie par les revendications indépendantes et des modes particuliers de réalisation sont indiqués dans les revendications dépendantes.

### Présentation des figures

L'invention sera mieux comprise à la lecture de la description suivante, donnée à titre d'exemple nullement limitatif, et faite en se référant aux figures 1 à 5 qui représentent :
[Fig. 1] une représentation schématique d'un satellite 30 de télécommunications contrôlé par un centre 17 de contrôle de mission,
[Fig. 2] un exemple de réalisation d'un système de gestion de flux opérationnels selon l'invention pour configurer la charge utile d'un satellite de télécommunications,
[Fig. 3] un autre exemple de réalisation d'un système de gestion de flux opérationnels selon l'invention,
[Fig. 4] une représentation schématique des principales étapes d'un procédé de gestion de flux opérationnels selon l'invention pour configurer la charge utile d'un satellite de télécommunications,
[Fig. 5] une représentation schématique de flux opérationnels de référence adaptés chacun respectivement pour configurer une charge utile d'un satellite de télécommunications selon une mission de référence définie par un jeu de paramètres correspondant à des exigences de mission.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée d'un mode de réalisation de l'invention

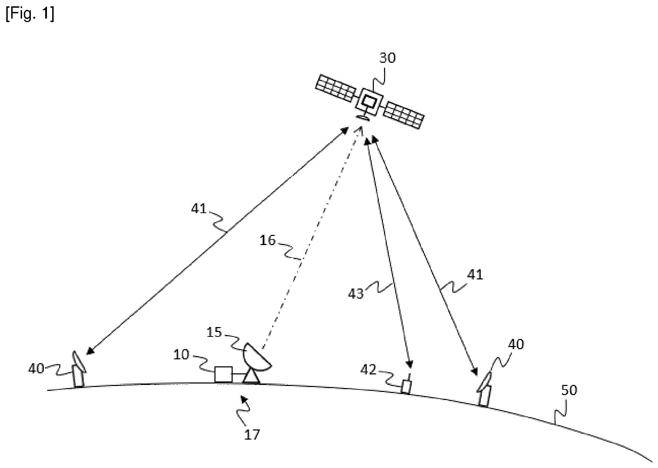

La figure 1 représente schématiquement un satellite 30 de télécommunications contrôlé par un centre 17 de contrôle de mission. Le satellite 30 de télécommunications est en orbite autour de la Terre. Le centre 17 de contrôle de mission est localisé au sol, à la surface 50 de la Terre.

Le centre 17 de contrôle de mission a pour tâche de gérer le bon déroulement de la mission du satellite 30 de télécommunications. A titre d'exemple nullement limitatif, la mission du satellite 30 de télécommunications peut correspondre à un service de téléphonie internationale (service de type FSS), à un service de diffusion de programmes de télévision (service de type DTH), à un service de connexion à Internet à haut-débit (service de type HTS), ou à un service de communication inter-satellites (ISL pour « Inter-Satellite Link »). La mission du satellite 30 de télécommunications peut également comporter plusieurs sous-missions à accomplir de façon simultanée ou de façon séquentielle. Chaque sous-mission peut alors par exemple correspondre l'un des services précédemment cités. On parle parfois de « mission hybride » lorsque la mission du satellite 30 de télécommunications comporte plusieurs sous-missions de différentes natures.

Le centre 17 de contrôle de mission permet notamment de mettre à jour la charge utile du satellite 30 de télécommunications pour répondre à d'éventuels changements dans la mission en cours, voire pour répondre à une nouvelle mission significativement différente de la mission en cours.

De façon conventionnelle, différents éléments de la charge utile du satellite 30 de télécommunications peuvent en effet être configurés à distance par l'envoi de commandes à travers des signaux radio émis sur un lien 16 de contrôle établi entre le satellite 30 de télécommunications et le centre 17 de contrôle de mission. Le lien 16 de contrôle permet au centre 17 de contrôle de mission d'appliquer une configuration à la charge utile du satellite 30 de télécommunications.

Tel qu'illustré sur la figure 1, le centre 17 de contrôle de mission comporte une antenne 15 et un module de communication pour communiquer avec le satellite 30 de télécommunication sur le lien 16 de contrôle.

Le centre 17 de contrôle de mission comporte également un système 10 de gestion de flux opérationnels. Un flux opérationnel correspond à un ensemble de tâches à accomplir pour configurer la charge utile d'un satellite de télécommunications de telle sorte qu'elle réponde à des exigences d'une mission spécifique définie par un opérateur. Un flux opérationnel comporte une séquence de modules algorithmiques ordonnés et paramétrés spécifiquement pour répondre aux exigences d'une mission spécifique.

A titre d'exemple nullement limitatif, et tel qu'illustré sur la figure 1, une fois qu'elle est configurée, la charge utile du satellite 30 de télécommunications peut permettre des échanges de données entre deux stations passerelles 40 via des liens 41 de communication radio établis respectivement entre chaque station passerelle 40 et le satellite 30 de télécommunications. Selon un autre exemple, la charge utile du satellite 30 de télécommunications peut permettre des échanges de données entre un utilisateur 42 et une station passerelle 40 via un lien 41 de communication radio établi entre le satellite 30 et la station passerelle 40 et un lien 43 de communication radio établi entre le satellite 30 et l'utilisateur 42.

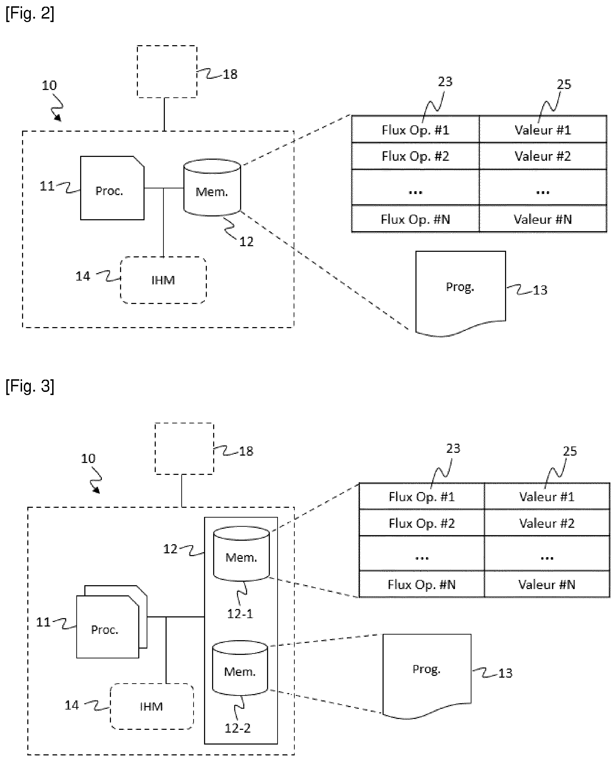

La figure 2 illustre schématiquement un exemple de réalisation d'un système 10 de gestion de flux opérationnels selon l'invention pour un centre 17 de contrôle de mission tel que celui illustré à la figure 1.

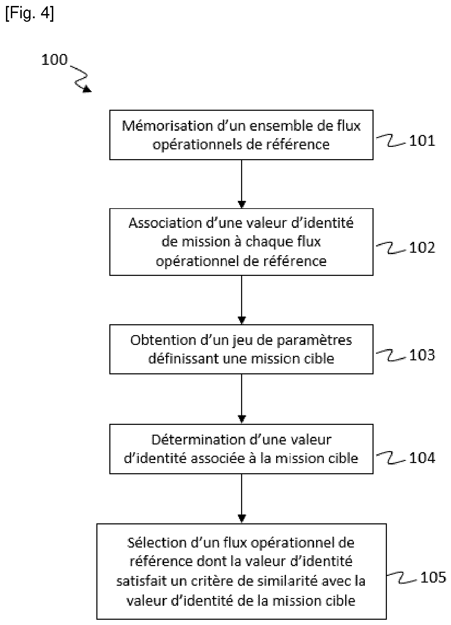

Le système 10 de gestion de flux opérationnels comporte au moins un processeur 11 et au moins une mémoire informatique 12 adaptés pour mettre en œuvre un procédé de gestion de flux opérationnels pour configurer la charge utile d'un satellite 30 de télécommunications (ce procédé sera détaillé ci-après en référence à la figure 4). Le système 10 de gestion de flux opérationnels peut optionnellement comporter une interface utilisateur 13 (aussi connue sous le terme IHM, acronyme de « Interface Homme-Machine ») pour recevoir des informations sur une mission cible pour laquelle la charge utile du satellite 30 de télécommunications doit être configurée. Alternativement ou en complément, le système 10 de gestion de flux opérationnels peut être connecté à une autre machine 18 configurée pour fournir des informations sur la mission cible.

La figure 4 illustre les principales étapes d'un tel procédé 100 de gestion de flux opérationnels. Tel qu'illustré sur la figure 1, la mémoire informatique 12 mémorise des instructions de code d'un programme 13 informatique qui, lorsqu'elles sont exécutées par le processeur 11, configure le processeur 11 pour mettre en œuvre certaines étapes de ce procédé 100. La mémoire informatique 12 mémorise également un ensemble de flux opérationnels 23 de référence

Tel qu'illustré sur la figure 3, le système 10 de gestion de flux opérationnels peut éventuellement comporter plusieurs processeurs pour mettre en œuvre des étapes du procédé 100. La mémoire informatique 12 peut éventuellement comporter plusieurs dispositifs électroniques de stockage distincts. Par exemple, un premier dispositif électronique de stockage 12-1 peut être utilisé comme base de données pour mémoriser un ensemble de flux opérationnels 23 de référence, tandis qu'un deuxième dispositif électronique de stockage 12-2 est utilisé pour mémoriser les instructions de code du programme 13 informatique.

Tel qu'illustré sur la figure 4, le procédé 100 de gestion de flux opérationnels comporte une étape de mémorisation 101, dans la mémoire informatique 12 (ou plus précisément dans le premier dispositif électronique de stockage 12-1 pour l'exemple illustré à la figure 3), d'un ensemble de flux opérationnels 23 de référence.

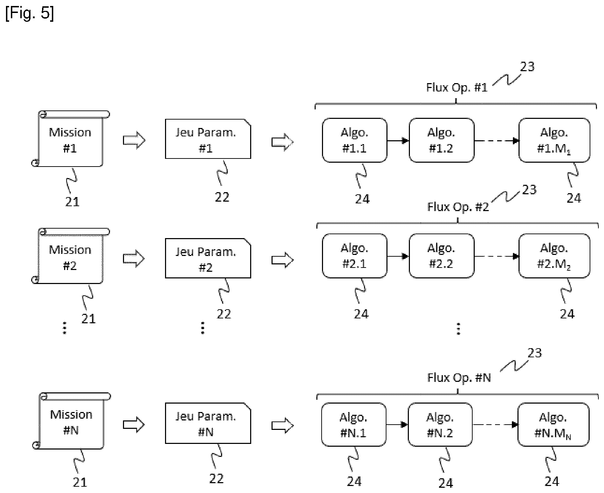

Tel qu'illustré sur la figure 5, chaque flux opérationnel 23 de référence comporte une séquence ordonnée de modules algorithmiques 24 spécifiquement paramétrés pour configurer une charge utile d'un satellite de télécommunications selon une mission de référence définie par un jeu de paramètres 22 correspondant à des exigences 21 de mission. Autrement dit, chaque flux opérationnel 23 de référence est respectivement associé à une mission de référence ; l'ordre et le paramétrage des modules algorithmiques 24 d'un flux opérationnel 23 de référence est défini en fonction des exigences 21 de la mission de référence.

Dans l'exemple illustré à la figure 5, le flux opérationnel « Flux Op. #1 » est adapté pour configurer une charge utile d'un satellite de télécommunications selon une mission de référence définie par le jeu de paramètres 22 « Jeu Param. #1 » correspondant aux exigences 21 de mission « Mission #1 », ..., le flux opérationnel « Flux Op. #N » est adapté pour configurer une charge utile d'un satellite de télécommunications selon une mission de référence définie par le jeu de paramètres 22 « Jeu Param. #N » correspondant aux exigences 21 de mission « Mission #N ».

Les exigences 21 d'une mission sont par exemple définies par un opérateur du segment terrestre d'un système de télécommunications par satellite (opérateur d'un système de gestion de réseau, ou NMS pour « Network Management System » ; opérateur d'un système d'orchestration de bout en bout, ou SEO ou « Satcom End-to-end Orchestration »).

Un ensemble de paramètres clés peuvent alors être déterminés pour représenter ces exigences 21 de mission. Le jeu de paramètres 22 ainsi déterminé peut alors ensuite être utilisé pour ordonner et configurer une séquence de modules algorithmiques 24 à exécuter dans le but de configurer la charge utile du satellite de façon cohérente avec les exigences 21 de mission.

Selon un premier exemple, un paramètre peut être représentatif d'un type de mission de télécommunications (par exemple une mission unique de type FSS, DTH, HTS ou ISL, une mission hybride de type HTS/DTH, une mission avec plusieurs sous-missions séquentielles, etc.). Lorsque plusieurs sous-missions doivent être réalisées de façon séquentielle, un paramètre peut indiquer l'ordre de ces sous-missions. Lorsque plusieurs sous-missions doivent être réalisées de façon simultanée (mission hybride), un paramètre peut indiquer une priorité entre ces sous-missions.

Selon un deuxième exemple, un paramètre peut être représentatif de la taille ou d'un format de représentation d'une zone géographique à couvrir. La zone géographique à couvrir peut correspondre par exemple à une région au sein d'un pays, à un ou plusieurs pays, voire à un continent entier. La zone géographique à couvrir peut par exemple être représentée sous la forme d'un polygone ou sous la forme d'un quadrillage (« grid » en anglais).

Selon un troisième exemple, un paramètre peut être représentatif d'un type de qualité de service à satisfaire, par exemple en termes de débit, de bande passante ou de latence. Selon la nature de la mission de télécommunication, différents types de qualité de service peuvent être privilégiés.

Selon un quatrième exemple, un paramètre peut être représentatif de l'existence de contraintes légales relatives à l'utilisation des ressources fréquentielles dans la zone géographique à couvrir.

Selon un cinquième exemple, un paramètre peut être représentatif d'une contrainte en termes de consommation énergétique.

Selon un sixième exemple, un paramètre peut être représentatif d'une contrainte en termes de puissance maximale, de puissance moyenne, d'un rapport entre puissance maximale et puissance moyenne, ou d'un rapport signal sur bruit.

Il convient de noter que les exemples de paramètres cités ci-avant sont donnés à titre illustratif et ils ne sont nullement limitatifs. D'autres paramètres peuvent bien entendu être considérés pour représenter les exigences 21 d'une mission. Le choix d'un jeu particulier de paramètres n'est qu'une variante de l'invention.

Dans l'exemple illustré sur la figure 5, un premier flux opérationnel 23 de référence (« Flux Op. #1 ») comporte un nombre M₁ de modules algorithmiques 24 ordonnés et paramétrés d'une certaine façon (« Algo. #1.1 », « Algo. #1.2 », ..., « Algo. #1.M₁ »), un deuxième flux opérationnel 23 de référence (« Flux Op. #2 ») comporte un nombre M₂ de modules algorithmiques 24 ordonnés et paramétrés d'une certaine façon (« Algo. #2.1 », « Algo. #2.2 », ..., « Algo. #2.M₂ »), ..., un Nième flux opérationnel 23 de référence (« Flux Op. #N ») comporte un nombre M_{N} de modules algorithmiques 24 ordonnés d'une certaine façon (« Algo. #N.1 », « Algo. #N.2 », ..., « Algo. #N.M_{N} »). Un même module algorithmique 24 peut éventuellement être utilisé par plusieurs flux opérationnels 23 de référence différents (et dans un tel cas ce module algorithmique peut être paramétré de la même façon ou de façon différente). Inversement, deux flux opérationnels 23 de référence différents peuvent éventuellement n'avoir aucun module algorithmique 24 en commun. Chacun de ces modules algorithmiques 24 est paramétré selon une liste spécifique de paramètres de réglage.

Selon un premier exemple, un module algorithmique 24 peut viser à définir un plan d'utilisation de ressources fréquentielles. Le plan d'utilisation de ressources fréquentielles indique par exemple à quelle fréquence et à quelle polarisation les signaux doivent être émis et reçus pour garantir à la fois des niveaux de performance suffisants et la satisfaction d'éventuelles contraintes réglementaires et/ou technologiques du système de communications par satellite.

Selon un deuxième exemple, un module algorithmique 24 peut viser à optimiser un agencement de faisceaux radio pour couvrir une zone géographique. L'agencement de faisceaux radio vise à diviser la zone à couvrir en sous-régions ayant des exigences spécifiques en matière de ressources du satellite et du système de communication, par exemple en termes de largeur de bande (prédimensionnement des canaux) ou de puissance radio de la charge utile.

Selon un troisième exemple, un module algorithmique 24 peut viser à optimiser une configuration d'un réseau de formation de faisceaux radio. Des facteurs de pondération peuvent être déterminés pour chaque source d'une antenne réseau à commande de phase pour adapter de manière pertinente la façon dont l'antenne rayonne vers des stations terrestres.

Selon un quatrième exemple, un module algorithmique 24 peut viser à optimiser une connectivité qui doit être systématiquement établie entre des faisceaux montant de stations passerelles 40 vers le satellite 30 de télécommunications et des faisceaux descendants du satellite 30 de télécommunications vers des utilisateurs 42.

Selon un cinquième exemple, un module algorithmique 24 peut viser à optimiser le partage de la puissance radio disponible à bord du satellite 30 de télécommunications entre une pluralité de faisceaux radio générés par le satellite 30 de télécommunications.

Selon un sixième exemple, un module algorithmique 24 peut viser à vérifier des contraintes de température, de puissance, et/ou de capacité d'au moins un équipement de la charge utile du satellite 30 de télécommunications.

Ces modules algorithmiques 24 sont considérés comme connus et disponibles pour l'homme de l'art.

Il convient de noter que les exemples de modules algorithmiques cités ci-avant sont donnés à titre illustratif et ils ne sont nullement limitatifs. D'autres modules algorithmiques peuvent bien entendu être utilisés pour générer des flux opérationnels 23 de référence. Le choix des modules algorithmiques à prendre en compte n'est qu'une variante de l'invention.

L'ordre dans lequel les modules algorithmiques 24 sont séquencés est important. Par exemple, la configuration d'un réseau de formation de faisceaux radio exploite à la fois les résultats de l'agencement des faisceaux radio et du plan d'utilisation de ressources fréquentielles ; dans le cas d'une mission HTS, la définition du plan d'utilisation de ressources fréquentielles ne peut pas être effectuée avant de connaître l'agencement des faisceaux radio.

Certains modules algorithmiques 24 sont spécifiques à certains types de mission. Par exemple, l'agencement de faisceaux radio ne concerne généralement pas les missions DTH pour lesquelles, dans la plupart des cas, le même contenu doit être diffusé partout dans une seule grande zone géographique.

Tel qu'illustré sur la figure 4, le procédé 100 de gestion de flux opérationnels comporte ensuite une étape d'association 102 d'une valeur 25 d'identité de mission à chaque flux opérationnel 23 de référence. La valeur 25 d'identité de mission est déterminée en fonction du jeu de paramètres 22 définissant la mission de référence du flux opérationnel 23 de référence. Dans les exemples illustrés aux figures 2 et 3, la mémoire informatique 12 mémorise un nombre N de flux opérationnels 23 de référence (le nombre N est par exemple égal plusieurs dizaines de flux opérationnels). Une valeur 25 d'identité de mission est associée à chacun des N flux opérationnels 23 de référence.

Une valeur 25 d'identité de mission correspond par exemple à un score calculé à partir du jeu de paramètres 22 qui représentent les exigences 21 de la mission correspondante. Par exemple, chaque paramètre prend une valeur numérique représentative d'une exigence de mission, et la valeur 25 d'identité de mission est déterminée à partir d'une combinaison linéaire des valeurs numériques de ces paramètres. Plus particulièrement, chaque paramètre peut être associé à un coefficient multiplicatif (c'est-à-dire un poids, un facteur de pondération) dont la valeur est représentative de l'importance dudit paramètre dans la définition d'un flux opérationnel pour configurer la charge utile d'un satellite de télécommunications.

Selon un autre exemple, une valeur 25 d'identité de mission pourrait correspondre à l'identifiant d'un nœud feuille d'un arbre de décision dont chaque nœud intermédiaire correspondrait à une décision prise en fonction de la valeur d'un des paramètres 22.

Tel qu'illustré sur la figure 4, le procédé 100 de gestion de flux opérationnels comporte ensuite une étape d'obtention 103, par exemple via l'interface utilisateur 13 ou la machine 18, d'un jeu de paramètres définissant une mission cible pour laquelle une charge utile du satellite 30 de télécommunications doit être configurée.

La mission cible correspond par exemple à une mise à jour de la mission actuelle du satellite 30 de télécommunications, ou à une nouvelle mission totalement différente de la mission actuelle du satellite 30 de télécommunications. La mise à jour d'une mission actuelle du satellite 30 de télécommunications peut correspondre par exemple à un changement limité de certaines exigences, comme par exemple la zone géographique à couvrir, des ressources fréquentielles disponibles, des métriques de performances relatives à des indicateurs de qualité de service, etc.

La mission cible est par exemple fournie au centre 17 de contrôle par un opérateur du segment terrestre d'un système de télécommunications par satellite.

Tel qu'illustré sur la figure 4, le procédé 100 de gestion de flux opérationnels comporte une étape de détermination 104, à partir du jeu de paramètres obtenu à l'étape 103, d'une valeur d'identité de mission associée à la mission cible.

La valeur d'identité de mission est déterminée de la même façon pour les missions de référence (à l'étape 102) et pour la mission cible (à l'étape 104), à partir du jeu de paramètres 22 respectif. Autrement dit, dans l'exemple où la valeur d'identité d'une mission correspond à un score calculé sous la forme d'une combinaison linéaire des valeurs numériques des paramètres 22 associés à la mission, la même combinaison linéaire est utilisée pour définir les valeurs 25 d'identité des missions de référence et la valeur d'identité de la mission cible. Dans l'exemple où la valeur d'identité d'une mission correspond à un identifiant d'un nœud feuille d'un arbre de décision, le même arbre de décision est utilisé pour définir les valeurs 25 d'identité des missions de référence et la valeur d'identité de la mission cible.

Enfin, le procédé 100 de gestion de flux opérationnels comporte une étape de sélection 105, parmi les flux opérationnels 23 de référence, d'un flux opérationnel 23 dont la valeur 25 d'identité de mission satisfait un critère de similarité avec la valeur d'identité de mission déterminée pour la mission cible. Une configuration de la charge utile du satellite 30 de télécommunications peut alors ensuite être généré en suivant le flux opérationnel 23 ainsi sélectionné (on entend par là qu'un ordinateur met en œuvre les différents modules algorithmiques correspondant au flux opérationnel sélectionné pour générer la configuration). La configuration ainsi générée peut ensuite être appliquée par le centre de contrôle 17 à la charge utile du satellite 30 de télécommunications via le lien 16 de contrôle.

Plusieurs critères de similarité peuvent être envisagés pour la sélection 105 d'un flux opérationnel. Le choix d'un critère particulier n'est qu'une variante de l'invention.

Selon un premier exemple, la valeur 25 d'identité de mission d'un des flux opérationnels 23 de référence satisfait le critère de similarité si ladite valeur 25 d'identité correspond à la valeur la plus proche de la valeur d'identité de la mission cible parmi l'ensemble des valeurs 25 d'identité de mission des flux opérationnels 23 de référence.

Selon un deuxième exemple, la valeur 25 d'identité de mission d'un flux opérationnel 23 de référence satisfait le critère de similarité si une différence entre ladite valeur 25 d'identité et la valeur d'identité de la mission cible est inférieur à un seuil prédéfini.

Il convient de noter que plusieurs flux opérationnels 23 de référence pourraient éventuellement présenter une valeur 25 d'identité de mission satisfaisant le critère de similarité avec la valeur d'identité de la mission cible. Dans ce cas, l'utilisateur du système 10 de gestion de flux opérationnels 23 peut éventuellement rester libre de choisir le flux opérationnel 23 de référence qui lui semble le plus approprié parmi ceux sélectionnés.

Un exemple très simplifié est fourni ci-après pour illustrer l'invention. Dans cet exemple, on considère trois paramètres pour définir une mission (le nombre de paramètres est bien plus important en réalité, il est par exemple égal à quelques centaines). Le premier paramètre représente le type de mission, il prend la valeur numérique '1' pour une mission de type HTS et la valeur numérique '2' pour une mission de type DTS. Le deuxième paramètre représente le type de qualité de service à satisfaire, il prend la valeur numérique '1' si la qualité de service est définie en termes de débit et la valeur numérique '2' si la qualité de service est définie en termes de bande passante. Le troisième paramètre représente le format de représentation de la zone géographique à couvrir, il prend la valeur numérique '1' pour un format de type « polygone » et la valeur numérique '2' pour un format de type « quadrillage ».

Dans l'exemple considéré, une valeur d'identité de mission est déterminée à partir d'une combinaison linéaire des valeurs numériques de ces paramètres. Un coefficient de valeur '100' est appliqué au paramètre qui représente le type de mission ; un coefficient de valeur '10' est appliqué au paramètre qui représente le type de qualité de service ; un coefficient de valeur '1' est appliqué au paramètre qui représente le format de représentation d'une zone géographique.

Dans l'exemple considéré, trois flux opérationnels 23 de référence sont disponibles :
- « Flux Op. #1 » présente une valeur d'identité de mission égale à '220' (il s'agit d'un flux opérationnel particulièrement bien adapté pour configurer la charge utile d'un satellite de télécommunications pour une mission de type DTH avec une demande en bande passante) ;
- « Flux Op. #2 » présente une valeur d'identité de mission égale à '122' (il s'agit d'un flux opérationnel particulièrement bien adapté pour configurer la charge utile d'un satellite de télécommunications pour une mission de type HTS avec une demande en bande passante et un format de représentation géographique de type « quadrillage ») ;
- « Flux Op. #3 » présente une valeur d'identité de mission égale à '110' (il s'agit d'un flux opérationnel particulièrement bien adapté pour configurer la charge utile d'un satellite de télécommunications pour une mission de type HTS avec une demande en débit).

Il convient de noter au passage que tous les paramètres ne sont pas nécessairement pris en compte lorsqu'on détermine la valeur d'identité associée à une mission (par exemple certains paramètres peuvent ne pas être disponibles pour certaines missions).

Imaginons que la charge utile du satellite 30 de télécommunication doit être mise à jour pour supporter une mission cible de type HTS avec une demande en bande passante et une représentation de type « quadrillage ». La valeur d'identité associée à la mission cible serait alors égale à '121', et le flux opérationnel sélectionné serait « Flux Op. #2 » (en considérant un critère de similarité consistant à trouver le flux opérationnel de référence dont la valeur d'identité est au plus proche de la valeur d'identité de la mission cible).

Imaginons maintenant que la charge utile du satellite 30 de télécommunication doit être mise à jour pour supporter une mission cible de type HTS avec une demande en débit et une représentation de type « polygone ». La valeur d'identité associée à la mission cible serait alors égale à '112', et le flux opérationnel sélectionné serait « Flux Op. #3 ».

Imaginons maintenant que la charge utile du satellite 30 de télécommunication doit être mise à jour pour supporter une mission cible de type DTH avec une demande en bande passante et une représentation de type « polygone ». La valeur d'identité associée à la mission cible serait alors égale à '222', et le flux opérationnel sélectionné serait « Flux Op. #1 ».

## Revendications

1. Centre (17) de contrôle de mission configuré pour :
- sélectionner, à l'aide d'un système (10) de gestion de flux opérationnels, un flux opérationnel permettant de configurer la charge utile d'un satellite (30) de télécommunications selon une mission cible,
- générer, à partir du flux opérationnel sélectionné, une configuration de la charge utile du satellite (30) de télécommunications,
- appliquer la configuration générée à la charge utile du satellite (30) de télécommunications,
le système (10) de gestion de flux opérationnels comprenant un processeur (11) et une mémoire informatique (12),
la mémoire informatique (12) mémorisant un ensemble de flux opérationnels (23) de référence,
chaque flux opérationnel (23) de référence comportant respectivement une séquence de modules algorithmiques (24) spécifiquement ordonnés et paramétrés pour configurer une charge utile d'un satellite de télécommunications selon une mission de référence définie par un jeu de paramètres (22) correspondant à des exigences (21) de mission,
chaque flux opérationnel (23) de référence étant associé à une valeur (25) d'identité de mission, la valeur (25) d'identité de mission étant déterminée en fonction du jeu de paramètres (22) définissant la mission de référence du flux opérationnel (23) de référence,
la mémoire informatique (12) comprenant des instructions de code de programme (13) qui, lorsqu'elles sont exécutées par le processeur (11), configure le processeur (11) pour mettre en œuvre les étapes suivantes d'un procédé (100) de gestion de flux opérationnel :
- obtenir (103) un jeu de paramètres définissant une mission cible pour laquelle une charge utile du satellite (30) de télécommunications doit être configurée,
- déterminer (104), à partir du jeu de paramètres obtenu, une valeur d'identité de mission pour la mission cible,
- sélectionner (105) un des flux opérationnels (23) de référence pour configurer la charge utile du satellite de télécommunications affectée à la mission cible, le flux opérationnel (23) de référence sélectionné correspondant à celui dont la valeur (25) d'identité de mission satisfait un critère de similarité avec la valeur d'identité de mission déterminée pour la mission cible.

2. Centre (17) de contrôle de mission selon la revendication 1 dans lequel, pour chaque mission de référence et pour la mission cible, chaque paramètre du jeu de paramètres (22) utilisé pour déterminer la valeur (25) d'identité de mission prend une valeur numérique représentative d'une exigence de mission, et la valeur (25) d'identité de mission est déterminée à partir d'une combinaison linéaire des valeurs numériques des paramètres.

3. Centre (17) de contrôle de mission selon l'une quelconque des revendications 1 à 2 dans lequel la valeur (25) d'identité de mission d'un des flux opérationnels (23) de référence satisfait le critère de similarité si ladite valeur (25) d'identité correspond à la valeur la plus proche de la valeur d'identité de la mission cible parmi l'ensemble des valeurs (25) d'identité de mission des flux opérationnels (23) de référence.

4. Centre (17) de contrôle de mission selon l'une quelconque des revendications 1 à 2 dans lequel la valeur (25) d'identité de mission d'un flux opérationnel (23) de référence satisfait le critère de similarité si une différence entre ladite valeur (25) d'identité et la valeur d'identité de la mission cible est inférieur à un seuil prédéfini.

5. Centre (17) de contrôle de mission selon l'une quelconque des revendications 1 à 4 dans lequel le jeu de paramètres (22) comporte un ou plusieurs paramètres parmi :
- un paramètre représentatif d'un type de mission de télécommunications,
- un paramètre représentatif d'un format de représentation d'une zone géographique à couvrir,
- un paramètre représentatif d'un type de qualité de service à satisfaire,
- un paramètre représentatif de l'existence de contraintes légales relatives à une utilisation de ressources fréquentielles,
- un paramètre représentatif d'une contrainte en termes de consommation énergétique,
- un paramètre représentatif d'une contrainte en termes de puissance maximale, de puissance moyenne, d'un rapport entre puissance maximale et puissance moyenne, ou d'un rapport signal sur bruit.

6. Centre (17) de contrôle de mission selon l'une quelconque des revendications 1 à 5 dans lequel au moins un flux opérationnel (23) de référence comporte un ou plusieurs des modules algorithmiques (24) suivants, chaque module algorithmique (24) étant associé à une liste spécifique de paramètres de réglage présentant des valeurs spécifiques :
- un module algorithmique visant à définir un plan d'utilisation de ressources fréquentielles,
- un module algorithmique visant à optimiser un agencement de faisceaux radio pour couvrir une zone géographique,
- un module algorithmique visant à optimiser une configuration d'un réseau de formation de faisceaux radio,
- un module algorithmique visant à optimiser une connectivité devant être systématiquement établie entre des faisceaux montant de stations passerelles (40) vers le satellite (30) de télécommunications et des faisceaux descendants du satellite (30) de télécommunications vers des utilisateurs (42),
- un module algorithmique visant à optimiser un partage d'une puissance radio disponible à bord du satellite (30) de télécommunications entre une pluralité de faisceaux radio générés par le satellite (30) de télécommunications,
- un module algorithmique visant à vérifier des contraintes de température, de puissance, et/ou de capacité d'au moins un équipement de la charge utile du satellite (30) de télécommunications.

7. Procédé de mise à jour d'une charge utile d'un satellite (30) de télécommunication par un centre (17) de contrôle de mission, ledit procédé de mise à jour comportant les étapes suivantes :
- sélectionner, en suivant un procédé (100) de gestion de flux opérationnels, un flux opérationnel pour configurer la charge utile d'un satellite (30) de télécommunications selon une mission cible,
- générer, à partir du flux opérationnel sélectionné, une configuration de la charge utile du satellite (30) de télécommunications,
- appliquer la configuration générée à la charge utile du satellite (30) de télécommunications,
le procédé (100) de gestion de flux opérationnels étant mis en œuvre par un système (10) comprenant un processeur (11) et une mémoire informatique (12), le procédé (100) de gestion de flux opérationnels comprenant les étapes suivantes :
mémoriser (101) dans la mémoire informatique (12) un ensemble de flux opérationnels (23) de référence, chaque flux opérationnel (23) de référence comportant une séquence ordonnée de modules algorithmiques (24) spécifiquement paramétrés pour configurer une charge utile d'un satellite de télécommunications selon une mission de référence définie par un jeu de paramètres (22) correspondant à des exigences (21) de mission,
associer (102) à chaque flux opérationnel (23) de référence une valeur (25) d'identité de mission, la valeur (25) d'identité de mission étant déterminée en fonction du jeu de paramètres (22) définissant la mission de référence du flux opérationnel (23) de référence,
configurer le processeur pour :
- obtenir (103) un jeu de paramètres définissant une mission cible pour laquelle une charge utile du satellite (30) de télécommunications doit être configurée,
- déterminer (104), à partir du jeu de paramètres obtenu, une valeur d'identité de mission associée à la mission cible,
- sélectionner (105) un des flux opérationnels (23) de référence pour configurer la charge utile du satellite de télécommunications affectée à la mission cible, le flux opérationnel (23) de référence sélectionné correspondant à celui dont la valeur (25) d'identité de mission satisfait un critère de similarité avec la valeur d'identité de mission déterminée pour la mission cible.

8. Procédé de mise à jour d'une charge utile d'un satellite (30) de télécommunication selon la revendication 7 dans lequel, pour chaque mission de référence et pour la mission cible, chaque paramètre du jeu de paramètres (22) utilisé pour déterminer la valeur (25) d'identité de mission prend une valeur numérique représentative d'une exigence de mission, et la valeur (25) d'identité de mission est déterminée à partir d'une combinaison linéaire des valeurs numériques des paramètres.

9. Procédé de mise à jour d'une charge utile d'un satellite (30) de télécommunication selon l'une quelconque des revendications 7 à 8 dans lequel la valeur (25) d'identité de mission d'un des flux opérationnels (23) de référence satisfait le critère de similarité si ladite valeur (25) d'identité correspond à la valeur la plus proche de la valeur d'identité de la mission cible parmi l'ensemble des valeurs (25) d'identité de mission des flux opérationnels (23) de référence.

10. Procédé de mise à jour d'une charge utile d'un satellite (30) de télécommunication selon l'une quelconque des revendications 7 à 9 dans lequel la valeur (25) d'identité de mission d'un flux opérationnel (23) de référence satisfait le critère de similarité si une différence entre ladite valeur (25) d'identité et la valeur d'identité de la mission cible est inférieur à un seuil prédéfini.

## Patentansprüche

1. Auftragskontrollzentrum (17), das für Folgendes konfiguriert ist:
- Auswählen, mithilfe eines Betriebsablaufmanagementsystems (10), eines Betriebsablaufs, der das Konfigurieren der Nutzlast eines Telekommunikationssatelliten (30) nach einem Zielauftrag ermöglicht,
- Erzeugen, ausgehend von dem ausgewählten Betriebsablauf, einer Konfiguration der Nutzlast des Telekommunikationssatelliten (30),
- Anwenden der erzeugten Konfiguration auf die Nutzlast des Telekommunikationssatelliten (30),
wobei das Betriebsablaufmanagementsystem (10) einen Prozessor (11) und einen Computerspeicher (12) umfasst,
der Computerspeicher (12) eine Reihe von Referenzbetriebsabläufen (23) speichert,
jeder Referenzbetriebsablauf (23) jeweils eine Sequenz von Algorithmenmodulen (24) aufweist, die speziell angeordnet und parametriert sind, um eine Nutzlast eines Telekommunikationssatelliten nach einem Referenzauftrag zu konfigurieren, die durch einen Parametersatz (22) definiert ist, der den Auftragsanforderungen (21) entspricht,
wobei jeder Referenzbetriebsablauf (23) einem Auftragsidentitätswert (25) zugeordnet ist, wobei der Auftragsidentitätswert (25) in Abhängigkeit von dem Parametersatz (22) bestimmt wird, der den Referenzauftrag des Referenzbetriebsablaufs (23) definiert,
wobei der Computerspeicher (12) Programmcodeanweisungen (13) umfasst, die, wenn sie von dem Prozessor (11) ausgeführt werden, den Prozessor (11) so konfigurieren, dass er die folgenden Schritte eines Betriebsablaufmanagementverfahrens (100) bereitstellt:
- Erhalten eines Parametersatzes (103), der einen Zielauftrag definiert, für den eine Nutzlast des Telekommunikationssatelliten (30) konfiguriert werden muss,
- Bestimmen (104), aus dem erhaltenen Parametersatz, eines Auftragsidentitätswerts für den Zielauftrag,
- Auswählen (105) eines der Referenzbetriebsabläufe (23), um die dem Zielauftrag zugewiesene Nutzlast des Telekommunikationssatelliten zu konfigurieren, wobei der ausgewählte Referenzbetriebsablauf (23) demjenigen entspricht, dessen Wert (25) der Auftragsidentität ein Ähnlichkeitskriterium mit dem für den Zielauftrag bestimmten Auftragsidentitätswert erfüllt.

2. Auftragskontrollzentrum (17) nach Anspruch 1, wobei, für jeden Referenzauftrag und für den Zielauftrag, jeder Parameter des Parametersatzes (22), der zum Bestimmen des Auftragsidentitätswerts (25) verwendet wird, einen numerischen Wert annimmt, der für eine Auftragsanforderung repräsentativ ist, und der Autragsidentitätswert (25) aus einer linearen Kombination der numerischen Werte der Parameter bestimmt wird.

3. Auftragskontrollzentrum (17) nach einem der Ansprüche 1 bis 2, wobei der Wert (25) der Auftragsidentität eines der Referenzbetriebsabläufe (23) das Ähnlichkeitskriterium erfüllt, wenn der Identitätswert (25) dem Wert entspricht, der dem Identitätswert des Zielauftrags von allen Werten (25) der Auftragsidentität der Referenzbetriebsabläufe (23) am nächsten kommt.

4. Auftragskontrollzentrum (17) nach einem der Ansprüche 1 bis 2, wobei der Auftragsidentitätswert (25) eines Referenzbetriebsablaufs (23) das Ähnlichkeitskriterium erfüllt, wenn eine Differenz zwischen dem Identitätswert (25) und dem Identitätswert des Zielauftrags unter einem vordefinierten Schwellenwert liegt.

5. Auftragskontrollzentrum (17) nach einem der Ansprüche 1 bis 4, wobei der Parametersatz (22) einen oder mehrere der folgenden Parameter umfasst:
- einen Parameter, der für einen Telekommunikationsauftragstyp repräsentativ ist,
- einen Parameter, der für ein Darstellungsformat eines abzudeckenden geografischen Gebiets repräsentativ ist,
- einen Parameter, der für eine Art von zu erfüllender Servicequalität repräsentativ ist,
- einen Parameter, der für das Bestehen gesetzlicher Auflagen in Bezug auf die Nutzung von Frequenzressourcen repräsentativ ist,
- einen Parameter, der für eine Beschränkung des Energieverbrauchs repräsentativ ist,
- einen Parameter, der für eine Beanspruchung in Bezug auf maximale Leistung, mittlere Leistung, ein Verhältnis zwischen maximaler Leistung und mittlerer Leistung oder ein Signal-Rausch-Verhältnis repräsentativ ist.

6. Auftragskontrollzentrum (17) nach einem der Ansprüche 1 bis 5, wobei mindestens ein Referenzbetriebsablauf (23) eines oder mehrere der folgenden Algorithmenmodule (24) umfasst, wobei jedes Algorithmusmodul (24) einer spezifischen Liste von Einstellparametern mit spezifischen Werten zugeordnet ist:
- ein Algorithmusmodul zum Definieren eines Nutzungsplans für Frequenzressourcen,
- ein Algorithmusmodul zum Optimieren einer Anordnung von Funkstrahlen zum Abdecken eines geografischen Bereichs,
- ein Algorithmusmodul zum Optimieren einer Konfiguration eines Funkstrahlbildungsnetzes,
- ein Algorithmusmodul zum Optimieren einer Konnektivität, die systematisch zwischen aufsteigenden Bündeln von Gateway-Stationen (40) zu dem Telekommunikationssatelliten (30) und absteigenden Bündeln von dem Telekommunikationssatelliten (30) zu Benutzern (42) hergestellt werden muss,
- ein Algorithmusmodul zum Optimieren der Aufteilung einer an Bord des Telekommunikationssatelliten (30) verfügbaren Funkleistung auf eine Vielzahl von von dem Telekommunikationssatelliten (30) erzeugten Funkstrahlen,
- ein Algorithmusmodul zum Überprüfen von Temperatur-, Leistungs- und/oder Kapazitätsbeschränkungen mindestens einer Ausrüstung der Nutzlast des Telekommunikationssatelliten (30).

7. Verfahren zum Aktualisieren einer Nutzlast eines Telekommunikationssatelliten (30) durch ein Auftragskontrollzentrum (17), wobei das Aktualisierungsverfahren die folgenden Schritte aufweist:
- Auswählen, unter Beachtung eines Betriebsablaufmanagementverfahrens (100), eines Betriebsablaufs zum Konfigurieren der Nutzlast eines Telekommunikationssatelliten (30) nach einem Zielauftrag,
- Erzeugen, ausgehend von dem ausgewählten Betriebsablauf, einer Konfiguration der Nutzlast des Telekommunikationssatelliten (30),
- Anwenden der erzeugten Konfiguration auf die Nutzlast des Telekommunikationssatelliten (30),
wobei das Betriebsablaufmanagementverfahren (100) von einem System (10) implementiert wird, das einen Prozessor (11) und einen Computerspeicher (12) umfasst, wobei das Betriebsablaufmanagementverfahren (100) die folgenden Schritte umfasst:
Speichern (101) in dem Computerspeicher (12) einer Reihe von Referenzbetriebsabläufen (23), wobei jeder Referenzbetriebsablauf (23) eine geordnete Sequenz von Algorithmenmodulen (24) aufweist, die speziell parametriert sind, um eine Nutzlast eines Telekommunikationssatelliten nach einem Referenzauftrag zu konfigurieren, die durch einen Parametersatz (22) definiert ist, der den Auftragsanforderungen (21) entspricht,
Zuordnen (102) eines Auftragsidentitätswerts (25) zu jedem Referenzbetriebsablauf (23), wobei der Auftragsidentitätswert (25) in Abhängigkeit von dem Parametersatz (22) bestimmt wird, der den Referenzauftrag des Referenzbetriebsablaufs (23) definiert,
Konfigurieren des Prozessors für Folgendes:
- Erhalten eines Parametersatzes (103), der einen Zielauftrag definiert, für den eine Nutzlast des Telekommunikationssatelliten (30) konfiguriert werden muss,
- Bestimmen (104), aus dem erhaltenen Parametersatz, eines des Zielauftrags zugeordneten Auftragsidentitätswerts,
- Auswählen (105) eines der Referenzbetriebsabläufe (23), um die dem Zielauftrag zugewiesene Nutzlast des Telekommunikationssatelliten zu konfigurieren, wobei der ausgewählte Referenzbetriebsablauf (23) demjenigen entspricht, dessen Wert (25) der Auftragsidentität ein Ähnlichkeitskriterium mit dem für den Zielauftrag bestimmten Auftragsidentitätswert erfüllt.

8. Verfahren zum Aktualisieren einer Nutzlast eines Telekommunikationssatelliten (30) nach Anspruch 7, wobei für jeden Referenzauftrag und für den Zielauftrag jeder Parameter des Parametersatzes (22), der zu dem Bestimmen des Auftragsidentitätswerts (25) verwendet wird, einen numerischen Wert annimmt, der für eine Auftragsanforderung repräsentativ ist, und der Auftragsidentitätswert (25) aus einer linearen Kombination der numerischen Werte der Parameter bestimmt wird.

9. Verfahren zum Aktualisieren einer Nutzlast eines Telekommunikationssatelliten (30) nach einem der Ansprüche 7 bis 8, wobei der Auftragsidentitätswert (25) eines der Referenzbetriebsabläufe (23) das Ähnlichkeitskriterium erfüllt, wenn der Auftragsidentitätswert (25) dem Wert entspricht, der dem Identitätswert des Zielauftrags von allen Werten (25) der Auftragsidentität der Referenzbetriebsabläufe (23) am nächsten kommt.

10. Verfahren zum Aktualisieren einer Nutzlast eines Telekommunikationssatelliten (30) nach einem der Ansprüche 7 bis 9, wobei der Auftragsidentitätswert (25) eines Referenzbetriebsablaufs (23) das Ähnlichkeitskriterium erfüllt, wenn eine Differenz zwischen dem Identitätswert (25) und dem Identitätswert des Zielauftrags kleiner als ein vordefinierter Schwellenwert ist.

## Claims

1. Mission control center (17) configured to:
- select, using an operational flow management system (10), an operational flow for configuring the payload of a telecommunications satellite (30) according to a target mission,
- generate, from the selected operational flow, a configuration of the payload of the telecommunications satellite (30),
- apply the configuration generated to the payload of the telecommunications satellite (30),
the operational flow management system (10) comprising a processor (11) and a computer memory (12),
the computer memory (12) storing a reference set of operational flows (23),
each reference operational flow (23) respectively comprising a sequence of algorithmic modules (24) specifically ordered and configured to configure a payload of a telecommunications satellite according to a reference mission defined by a set of parameters (22) corresponding to mission requirements (21),
each reference operational flow (23) being associated with a mission identity value (25), the mission identity value (25) being determined according to the set of parameters (22) defining the reference mission of the reference operational flow (23),
the computer memory (12) comprising program code instructions (13) which, when they are executed by the processor (11), configure the processor (11) to implement the following steps of an operational flow management method (100) :
- obtain (103) a set of parameters defining a target mission for which a payload of the telecommunications satellite (30) must be configured,
- determining (104), from the set of parameters obtained, a mission identity value for the target mission,
- selecting (105) one of the reference operational flows (23) to configure the payload of the telecommunications satellite assigned to the target mission, the selected reference operational flow (23) corresponding to that whose mission identity value (25) meets a criterion of similarity with the mission identity value determined for the target mission.

2. Mission control center (17) according to claim 1, wherein, for each reference mission and for the target mission, each parameter of the set of parameters (22) used to determine the mission identity value (25) takes a numerical value representative of a mission requirement, and the mission identity value (25) is determined from a linear combination of the numerical values of the parameters.

3. Mission control center (17) according to either one of claims 1 to 2, wherein the mission identity value (25) of one of the reference operational flows (23) meets the criterion of similarity if said identity value (25) corresponds to the value closest to the identity value of the target mission among the set of mission identity values (25) of the reference operational flows (23).

4. Mission control center (17) according to either one of claims 1 to 2, wherein the mission identity value (25) of a reference operational flow (23) meets the criterion of similarity if a difference between said identity value (25) and the identity value of the target mission is less than a predefined threshold.

5. Mission control center (17) according to any one of claims 1 to 4, wherein the set of parameters (22) includes one or more parameters from:
- a parameter representative of a type of telecommunications mission,
- a parameter representative of a format for representing a geographical area to be covered,
- a parameter representative of a type of service quality to be met,
- a parameter representative of the existence of legal constraints relating to the use of frequency resources,
- a parameter representative of a constraint in terms of energy consumption,
- a parameter representative of a constraint in terms of maximum power, mean power, a ratio between maximum power and mean power, or a signal-to-noise ratio.

6. Mission control center (17) according to any one of claims 1 to 5, wherein at least one reference operational flow (23) includes one or more of the following algorithmic modules (24), each algorithmic module (24) being associated with a specific list of adjustment parameters having specific values:
- an algorithmic module aimed at defining a frequency resource use plan,
- an algorithmic module aimed at optimizing an arrangement of radio beams to cover a geographical area,
- an algorithmic module aimed at optimizing a configuration of a radio beam forming network,
- an algorithmic module aimed at optimizing connectivity to be systematically established between upbeams of gateway stations (40) to the telecommunications satellite (30) and downbeams of the telecommunications satellite (30) to users (42),
- an algorithmic module aimed at optimizing a sharing of a radio power available on board the telecommunications satellite (30) between a plurality of radio beams generated by the telecommunications satellite (30),
- an algorithmic module aimed at verifying temperature, power, and/or capacity constraints of at least one item of payload equipment of the telecommunications satellite (30).

7. Method for updating a payload of a telecommunication satellite (30) by a mission control center (17), said method for updating comprising the following steps:
- selecting, by following an operational flow management method (100), an operational flow for configuring the payload of a telecommunications satellite (30) according to a target mission,
- generate, from the selected operational flow, a configuration of the payload of the telecommunications satellite (30),
- apply the configuration generated to the payload of the telecommunications satellite (30),
the operational flow management method (100) being implemented by a system (10) comprising a processor (11) and a computer memory (12), the operational flow management method (100) comprising the following steps:
storing (101) in the computer memory (12) a set of reference operational flows (23), each reference operational flow (23) comprising an ordered sequence of algorithmic modules (24) specifically configured to configure a payload of a telecommunications satellite according to a reference mission defined by a set of parameters (22) corresponding to mission requirements (21),
associating (102) with each reference operational flow (23) a mission identity value (25), the mission identity value (25) being determined according to the set of parameters (22) defining the reference mission of the reference operational flow (23),
configuring the processor to:
- obtain (103) a set of parameters defining a target mission for which a payload of the telecommunications satellite (30) must be configured,
- determine (104), from the parameter set obtained, a mission identity value associated with the target mission,
- selecting (105) one of the reference operational flows (23) to configure the payload of the telecommunications satellite assigned to the target mission, the selected reference operational flow (23) corresponding to that whose mission identity value (25) meets a criterion of similarity with the mission identity value determined for the target mission.

8. Method for updating a payload of a telecommunication satellite (30) according to claim 7, wherein, for each reference mission and for the target mission, each parameter of the set of parameters (22) used to determine the mission identity value (25) takes a numerical value representative of a mission requirement, and the mission identity value (25) is determined from a linear combination of the numerical values of the parameters.

9. Method for updating a payload of a telecommunication satellite (30) according to either one of claims 7 to 8, wherein the mission identity value (25) of one of the reference operational flows (23) meets the criterion of similarity if said identity value (25) corresponds to the value closest to the identity value of the target mission among the set of mission identity values (25) of the reference operational flows (23).

10. Method for updating a payload of a telecommunication satellite (30) according to any one of claims 7 to 9, wherein the mission identity value (25) of a reference operational flow (23) meets the criterion of similarity if a difference between said identity value (25) and the identity value of the target mission is less than a predefined threshold.
